(19) **Europäisches Patentamt**
**European Patent Office**
**Office européen des brevets**

(11) **EP 3 511 299 A1**

(12) # EUROPEAN PATENT APPLICATION

(43) Date of publication:
**17.07.2019 Bulletin 2019/29**

(21) Application number: **18151655.0**

(22) Date of filing: **15.01.2018**

(51) Int Cl.:
*C02F 1/00* *(2006.01)*    *C02F 1/467* *(2006.01)*
*C02F 1/461* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Danish Clean Water A/S**
**6400 Sønderborg (DK)**

(72) Inventor: **JEPSEN, Hardy Peter**
**6400 Sønderborg (DK)**

(74) Representative: **Zacco Denmark A/S**
**Arne Jacobsens Allé 15**
**2300 Copenhagen S (DK)**

(54) **REDUNDANT SURVEILLANCE OF A WATER STERILIZING SYSTEM**

(57)    The invention relates to a surveillance system for surveillance of the operation of a sterilizing system for dosing a sterilizing solution into a water supply arrangement, a method of surveillance, and a sterilizing system or a water supply arrangement wherein the surveillance system is incorporated. The surveillance system being arranged for receiving a first input relating to water usage from the water supply arrangement and for receiving a second input relating to the dosage of the sterilizing solution into the water supply arrangement as well as for determining a relation between the water usage and the dosage of the sterilizing solution.

Fig. 2

## Description

## Technical Field

The invention relates to a surveillance system for surveillance of the operation of a sterilizing system for dosing a sterilizing solution into a water supply arrangement, a method of surveillance, and a sterilizing system or a water supply arrangement wherein the surveillance system is incorporated.

## Background art

A sterilizing system produces a sterilizing solution by means of an electrolytic cell, which drives a non-spontaneous redox reaction through the application of electrical energy. The electrolytic cell comprises two electrodes, a cathode and an anode. The electrolytic cell may be fed with e.g. brine, which is then electrolyzed to obtain chloride ions (one type of sterilizing solution), which is afterwards dosed into a water supply arrangement via e.g. a dosing/metering pump. The amount of injected sterilizing solution into the water supply arrangement may be controlled by an Oxidation Reduction Potential (ORP) sensor. Other sensors are also sometimes used, e.g. sensors measuring the amount of chlorine in the water or a combination of a chlorine sensor and a pH sensor. The sterilizing system may dose the sterilizing solution into the water in reaction to an output from the ORP sensor so as to maintain a constant level of oxidation/reduction potential in the water. The ORP sensor would hereby ensuring sufficient amounts of sterilizing solution to eliminate bacteria in the water without over-injecting sterilizing solution.

An ORP sensor is an electrochemical sensor. The electrolytes in the ORP sensor is affected by use, hence the ORP sensor has a limited lifetime. The lifetime may be multiple years, but the ORP sensor will always have a limited lifetime.

To ensure stability in the level of sterilizing solution in the water over a longer period of time the ORP sensor requires frequent calibration to overcome the slow breakdown of the electrolytes within the ORP sensor. However, frequent and regular calibration of an ORP sensor is responsible for a larger operation cost of a water supply arrangement which comprises such an ORP sensor.

A possible solution to the problem with frequent calibration may be to use a "double sensor system", using two ORP sensors. Hereby, it may be possible to correlate the values obtained from one ORP sensor with the values obtained from the other ORP sensor. However, such a system would have a larger production cost. In addition to the added production cost, it will also have a significant larger maintenance cost, as two sensors now has a need for calibration, and limited lifetime and need for replacement. Hence, such a solution does not fully address the need for a lower operation cost of the entire system.

## Brief description of the invention

To solve the problem of the relatively large operation cost, the present invention relates to a surveillance system for surveillance of the operation of a sterilizing system. The sterilizing system is for dosing a sterilizing solution produced by an electrolytic cell of the sterilizing system into a water supply arrangement. The sterilizing system comprises an Oxidation Reduction Potential (ORP) sensor for determining the oxidation/reduction potential of water within the water supply arrangement.

In describing the aspects of the invention specific terminology will be used for the sake of clarity. However, the invention is not intended to be limited to the specific terms so selected, and it is understood that each specific term includes all technical equivalents which operate in a similar manner to accomplish a similar purpose.

Disclosed herein in a first aspect of the present invention is a surveillance system for surveillance of the operation of a sterilizing system for dosing a sterilizing solution produced by an electrolytic cell of the sterilizing system into a water supply arrangement, the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement, the surveillance system being arranged for receiving a first input relating to water usage from the water supply arrangement and for receiving a second input relating to the dosage of the sterilizing solution into the water supply arrangement as well as for determining a relation between the water usage and the dosage of the sterilizing solution.

An ORP sensor may be comprised of an ORP electrode and a reference electrode. The principle behind the ORP measurement is the use of an inert metal electrode (platinum, sometimes gold), the ORP electrode, which, due to its low resistance, will give up electrons to an oxidant or accept electrons from a reductant. The ORP electrode will continue to accept or give up electrons until it develops a potential, due to the build-up charge, which is equal to the ORP of the solution. The typical accuracy of an ORP measurement is $\pm 5$ mV, but may vary from device to device. Sometimes the exchange of electrons between the ORP electrode and certain chemical substances is hampered by a low rate of electron exchange (exchange current density).

The reference electrode used for ORP measurements is typically the same silver-silver chloride electrode used with pH measurements. In contrast with pH measurements, some offset in the reference is tolerable in ORP since the mV changes measured in most ORP applications are large. In certain specific applications, an ORP sensor may use a silver billet as a reference, or even a pH electrode.

The ORP sensor measures the oxidation/reduction potential of a solution. The oxidation/reduction potential of a solution is a measure of the oxidizing or reducing power of the solution. Every oxidation or reduction can be characterized by a half-reaction, which gives all of the chemical substances participating in the reaction. The ORP of the solution depends upon the logarithm of the concentrations of the substances participating in the half reaction. The ORP can be calculated using the Nernst equation.

As the ORP sensor is an electrochemical sensor, the electrolytes in the ORP sensor is affected by use, hence the ORP sensor has a limited lifetime. The lifetime may be multiple years, but the ORP sensor will always have a lifetime.

To ensure stability in the level of sterilizing solution in the water over a longer period the ORP sensor requires frequent calibration to overcome the slow breakdown of the electrolytes within the ORP sensor, which is responsible for an increase in operation cost of the entire system.

The present invention solves the problem of increased operation cost, due to frequent calibration, by a surveillance system which will reduce the operation cost of the entire system. The surveillance system will provide a relation between the used sterilizing solution in relation to used water. In normal production mode, when the ORP sensor is functioning as normal the relation will be within a specific range. If the ORP sensor requires calibration or replacement the relation may start to deviate from previous values determined. Hereby, e.g. an operator would be aware of the requirement for calibration or replacement. Use of such surveillance system would hence remove the frequent and regular calibration, as the operator is now fully aware of the current status of the ORP sensor.

The relation between the water usage (W) and the dosage of the sterilizing solution (S) may be e.g.,

$$\frac{W}{S} \ ; \ W^{1.2} \cdot S^{1.5} \ ; \ \frac{W^2}{S} \ ; \ \frac{S}{S+W} \ ; \ \frac{W+S}{W} \ ; \ \frac{S^2}{W} \ ;$$

$$Log\left[\frac{S}{W}\right] \ ; \ or \ \frac{S^{1.5}}{W^{1.2}}$$

In one or more embodiments of the present invention, the surveillance system is further arranged for monitoring the determined relation between the water usage and the dosage of the sterilizing solution, and determining whether the relation is within a range of values representing a normal operating mode of the sterilizing system, and providing an output accordingly.

One of the advantages of such a surveillance system is that it potentially reduces the maintenance cost of the entire system, as the need for frequent calibration is removed, as the system now will provide an output telling e.g. the operator that the sensor requires calibration. Hereby, the ORP sensor will only be calibrated when required instead of on a regular basis.

In one or more embodiments of the present invention, the output is an alarm.

In one or more embodiments of the present invention, the sterilizing system further comprises a brine tank arranged to supply the electrolytic cell with a sodium chloride brine solution.

In one or more embodiments of the present invention, the sterilizing system further comprises an ion-exchange water softener arranged to supply the electrolytic cell with deionized water.

In one or more embodiments of the present invention, the electrolytic cell comprises an anode compartment and a cathode compartment separated by a porous ion-exchange membrane.

In one or more embodiments of the present invention, the water supply arrangement comprises a temperature sensor arranged for measuring temperatures of hot water within the water supply arrangement, and wherein the surveillance system further being arranged for receiving a third input relating to the temperature of hot water within the water supply arrangement as well as for determining a relation between the water usage, the temperature of the hot water, and the dosage of the sterilizing solution.

In one or more embodiments of the present invention, the water supply arrangement comprises a water tank for hot water.

Disclosed herein in a second aspect of the present invention is a method of surveillance of the operation of a sterilizing system for dosing a sterilizing solution produced by an electrolytic cell into a water supply arrangement, the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement, the method comprising the steps of

 a) repetitively monitoring a water usage from the water supply arrangement as well as the dosage of the sterilizing solution into the water supply arrangement, and

 b) determining a relation between the water usage and the dosage of the sterilizing solution.

One of the advantages of such a method is a possible reduction of the operation cost of an entire water supply arrangement. The method will provide a relation between the used sterilizing solution in relation to used water. In normal production mode, when the ORP sensor is functioning as normal the relation will be within a specific range. If the ORP sensor requires calibration or replacement the relation may start to deviate from previous values determined. Hereby, e.g. an operator would be aware of the requirement for calibration or replacement. This method would hereby remove the frequent and regular calibration steps in a normal ORP sensor system, as the operator is now fully aware of the current status of the ORP sensor.

In one or more embodiments of the present invention, the sterilizing system further comprises a brine tank arranged to supply the electrolytic cell with a sodium chloride brine solution.

In one or more embodiments of the present invention, the sterilizing system further comprising an ion-exchange water softener arranged to supply the electrolytic cell with deionized water.

In one or more embodiments of the present invention, the electrolytic cell comprises an anode compartment and a cathode compartment separated by a porous ion-exchange membrane.

In one or more embodiments of the present invention, the water supply arrangement further comprises a temperature sensor arranged for measuring temperatures of hot water within the water supply arrangement, and wherein step b) additionally determines a relation between the water usage, the temperature of the hot water, and the dosage of the sterilizing solution.

In one or more embodiments of the present invention, the water supply arrangement comprises a water tank for hot water.

In one or more embodiments of the present invention, the method further comprises the steps of

c) monitoring the determined relation between the water usage and the dosage of the sterilizing solution, and

d) determining whether the relation is within a range of values representing a normal operating mode of the sterilizing system, and providing an output accordingly.

One of the advantages of such a method is that is provides a redundant surveillance of the ORP sensor. Hereby making an operator aware of failure of the ORP sensor, and hereby notice of required calibration or installation of a new ORP sensor.

In one or more embodiments of the present invention, step d) is provided by comparing the determined relation between the water usage and the dosage of the sterilizing solution to a predetermined value, and providing an output in case the determined relation deviates more than a predetermined amount from said predetermined value.

In one or more embodiments of the present invention, step d) is provided by determining a lower and higher tolerance value based on the determined relation between the water usage and the dosage of the sterilizing solution, and providing an output in case the relation between the water usage and the dosage of the sterilizing solution raises above or falls below the lower and higher tolerance value.

In one or more embodiments of the present invention, the output is an alarm notifying an operator of an error.

Disclosed herein in a third aspect of the present invention is a sterilizing system for dosing a sterilizing solution produced by an electrolytic cell of the sterilizing system into a water supply arrangement, the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement, the sterilizing system comprising a surveillance system comprising a first measuring device for measuring water usage and a second measuring device for measuring a unit related to dosage of the sterilizing solution, wherein the surveillance system is being arranged for:

a) receiving a first input relating to water usage from the water supply arrangement from the first measuring device,

b) receiving a second input relating to the dosage of the sterilizing solution into the water supply arrangement from the second measuring device, and

c) determining a relation between the water usage and the dosage of the sterilizing solution.

In one or more embodiments of the present invention, the sterilizing system is further being arranged for the steps of

d) monitoring the determined relation between the water usage and the dosage of the sterilizing solution, and

e) determining whether the relation is within a range of values representing a normal operating mode of the sterilizing system, and providing an output accordingly.

In one or more embodiments of the present invention, the output is an alarm.

In one or more embodiments of the present invention, the sterilizing system further comprises a brine tank arranged to supply the electrolytic cell with a sodium chloride brine solution.

In one or more embodiments of the present invention, the sterilizing system further comprises an ion-exchange water softener arranged to supply the electrolytic cell with deionized water.

In one or more embodiments of the present invention, the water supply arrangement comprises a temperature sensor arranged for measuring temperatures of hot water within the water supply arrangement, and wherein the surveillance system further being arranged for receiving a third input relating to the temperature of hot water within the water supply arrangement as well as for determining a relation between the water usage, the temperature of the hot water, and the dosage of the sterilizing solution.

In one or more embodiments of the present invention, the water supply arrangement comprises a water tank for hot water.

In one or more embodiments of the present invention, the first measuring device is selected from a flow sensor, an energy sensor, a water level sensor, a feedback from a flow controlled water supply pump, or a control signal from a water supply pump.

In one or more embodiments of the present invention, the second measuring device is selected from a flow sensor, an energy sensor, a water level sensor, a feedback from a flow controlled dosage pump, a control signal from a flow controlled dosage pump, or a hour meter.

In one or more embodiments of the present invention, the electrolytic cell comprises an anode compartment and a cathode compartment separated by a porous ion-exchange membrane.

In one or more embodiments of the present invention, the sterilizing system further comprises an ion-exchange water softener arranged to supply the electrolytic cell with deionized water and a brine tank arranged to supply the electrolytic cell with a sodium chloride brine solution.

In one or more embodiments of the present invention, the ORP sensor is being arranged for measuring an oxidation/reduction potential in water within the water supply arrangement and adjusts the amount of released sterilizing solution from the sterilizing system to maintain a constant oxidation/reduction potential in the water.

Disclosed herein in a fourth aspect of the present invention is a water supply arrangement comprising:

- a water tank for hot water;
- a sterilizing system for dosing a sterilizing solution produced by an electrolytic cell of the sterilizing system into the water supply arrangement, wherein the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement; and
- a surveillance system comprising a first measuring device for measuring water usage and a second measuring device for measuring dosage of the sterilizing solution, wherein the surveillance system is being arranged for:

    a) receiving a first input relating to water usage from the water supply arrangement from the first measuring device,
    b) receiving a second input relating to the dosage of the sterilizing solution into the water supply arrangement from the second measuring device, and
    c) determining a relation between the water usage and the dosage of the sterilizing solution.

In one or more embodiments of the present invention, the surveillance systems of the water supply arrangement is further being arranged for the steps of

    d) monitoring the determined relation between the water usage and the dosage of the sterilizing solution, and
    e) determining whether the relation is within a range of values representing a normal operating mode of the sterilizing system, and providing an output accordingly.

In one or more embodiments of the present invention, the ORP sensor is being arranged for measuring an oxidation/reduction potential in water within the water supply system and adjusts the amount of released sterilizing solution from the sterilizing system to maintain a constant oxidation/reduction potential in the water.

In one or more embodiments of the present invention, the electrolytic cell comprises an anode compartment and a cathode compartment separated by a porous ion-exchange membrane.

In one or more embodiments of the present invention, the water supply arrangement further comprises an ion-exchange water softener arranged to supply the electrolytic cell with deionized water and a brine tank arranged to supply the electrolytic cell with a sodium chloride brine solution, and wherein the water supply arrangement is being arranged for conducting a regeneration of the water softener by use of the sodium chloride brine solution from the brine tank.

In one or more embodiments of the present invention, the water supply arrangement further comprises a temperature sensor for measuring temperatures of the hot water, wherein the surveillance system is further being arranged for using said measured temperature as a third input when determining the relation between the water usage and the dosage of the sterilizing solution.

In one or more embodiments of the present invention, the water supply arrangement further comprises a dosing pump from the sterilizing system for injection of sterilizing solution produced by the electrolytic cell of the sterilizing system into the water supply arrangement.

In one or more embodiments of the present invention, the surveillance system is arranged for determining the concentration of sterilizing solution in the water, wherein the concentration is determined based on the overall quantity of water within the water supply arrangement, the usage of water, and the accumulated dosage of sterilizing solution.

When no water is used from the water supply arrangement, the sterilizing system will inject small amounts of sterilizing solution to compensate for the passive degradation of the sterilizing solution. E.g. the chloride ions may over time form sodium chloride in the water. The surveillance system is then arranged for determining the overall concentration of chloride, both as free ions and bound as sodium chloride by determining the initial concentration of chloride within the water in the water supply arrangement right when no water is being used and adding the amount of added sterilizing solution over the time period where no water is being used.

In one or more embodiments of the present invention, the surveillance system is arranged for determining the concentration of added sterilizing solution in the water, wherein the concentration is determined based on the overall quantity of water within the water supply arrangement, the usage of water, and the accumulated dosage of sterilizing solution; and the surveillance system is arranged for stopping the dosage of sterilizing solution if the concentration of the sterilizing solution reaches a predetermined threshold.

In one or more embodiments of the present invention, the surveillance system is arranged for providing an output notifying an operator of the current concentration of sterilizing solution within the water supply arrangement.

When describing the embodiments of the present invention, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

## Brief description of the drawings

The above and other features and advantages of the present invention will become readily apparent to those skilled in the art by the following detailed description of exemplary embodiments thereof with reference to the attached drawings, in which:

Figure 1 shows a schematic flowchart of a method of surveillance of the operation of a sterilizing system according to one embodiment of the present invention.

Figure 2 shows a schematic drawing of a water supply arrangement according to one embodiment of the present invention.

Figure 3 shows illustrative data of water usage and dosage of sterilizing solution according to one example.

Figure 4 shows illustrative data of the ratio of dosage of sterilizing solution to water usage according to one example.

Figure 5 shows illustrative data of water usage, dosage of sterilizing solution, the ratio between dosage sterilizing solution and water usage, in addition to averaged values of dosage of sterilizing solution and the ratio between dosage sterilizing solution and water usage according to one example.

## Detailed description of the invention

Various embodiments are described hereinafter with reference to the figures. It should be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

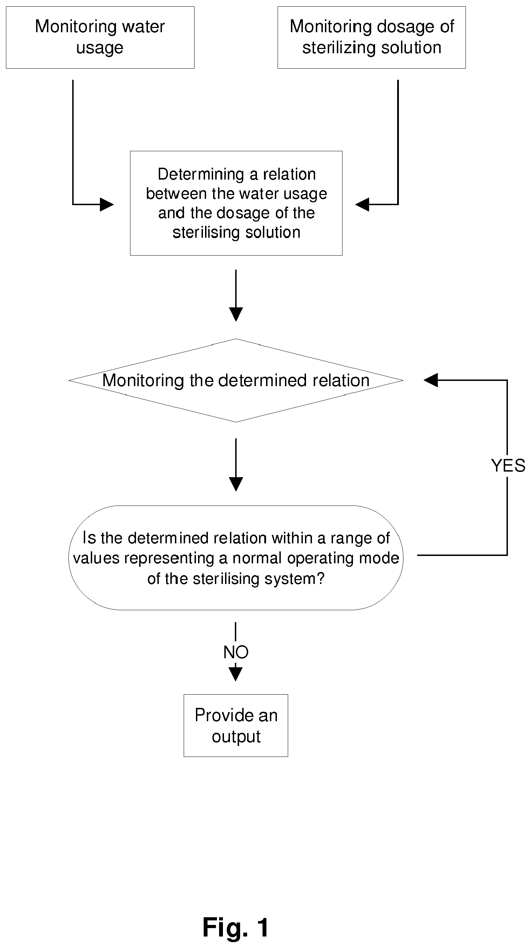

Figure 1 illustrates a flowchart of a method of surveillance of the operation of a sterilizing system according to one embodiment of the present invention. The method of surveillance of the operation of a sterilizing system for dosing a sterilizing solution comprises the steps of repeatedly monitoring the usage of water. This can be monitored by e.g. a flow sensor, an energy sensor, a water level sensor, a feedback from a flow controlled water supply pump, or a control signal from a water supply pump. Additionally; the method comprises repeatedly monitoring the dosage of the sterilizing solution which is produced by e.g. an electrolytic cell. The dosage of sterilizing solution may be measured by e.g. directly measuring the amount of sterilizing solution added to a water supply system. Alternatively, it may be measured by analyzing e.g. the power usage of the electrolytic cell or the amount of brine used. The dosage of sterilizing solution may be measured by e.g. a flow sensor, an energy sensor, a water level sensor, a feedback from a flow controlled dosage pump, a control signal from a flow controlled dosage pump, or a hour meter.

The method then comprises the step of determining a relation between the water usage and the dosage of the sterilizing solution. This relation may be the ratio of dosage of sterilizing solution to water usage however; it may also be other mathematical relationships. The method then comprise the step of continuously monitor the determined relation between dosage of sterilizing solution and water usage.

The relation between the water usage and the dosage of the sterilizing solution may vary from one setup to another (one water supply arrangement to another water supply arrangement), as depending on the size of the arrangement, the length of water pipes within the arrangement, amount of water in the water pipes, size of the hot water tank, and other parameters the daily use of sterilizing solution, and hereby the dosage of sterilizing solution into the system, may vary from one setup to another. However, in the respective arrangements a constant level of sterilizing solution within the water supply arrangement will be obtained over time, but this level cannot be compared arrangement *versus* arrangement.

A range of values is predetermined to represent a normal operation mode of the sterilizing system. The monitored relation between water and sterilizing solution is compared to this range of values. If the relation is within the range of values representing a normal operation monitoring of the determined relation may continue. If the relation is outside the range of values representing a normal operation an output should be provide. The output may be e.g. an alarm notifying an operator that the values are outside normal operation. Alternatively, an output could be provided if the relation is within the range of values representing a normal operation, e.g. notifying an operator that the sterilizing system is functioning as normal.

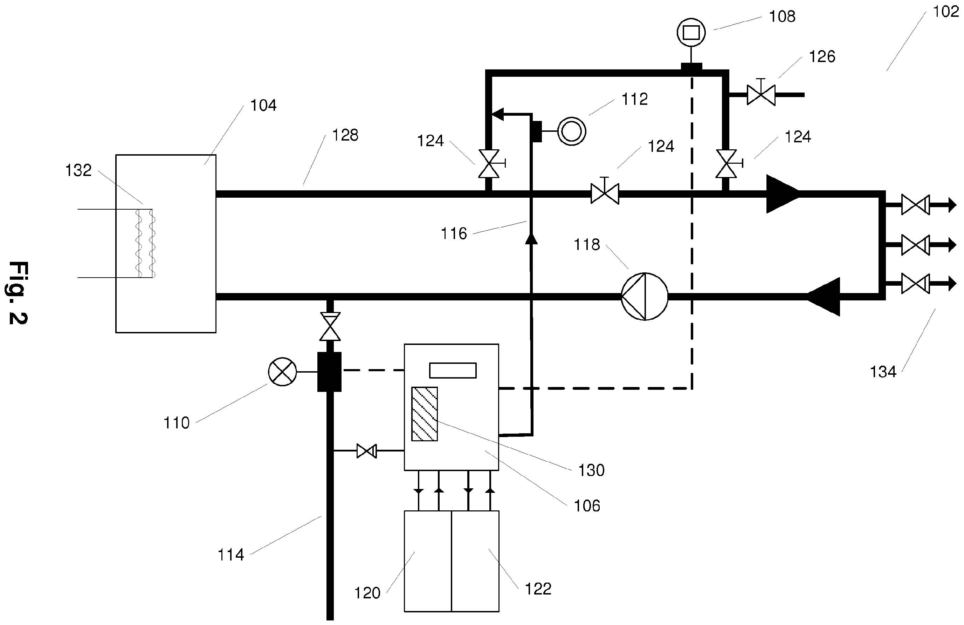

Figure 2 illustrates a schematic drawing of a water supply arrangement (102). The water supply arrangement (102) comprise a water tank (104) for hot water and/or for heating cold water to hot water, a sterilizing system (106) for dosing a sterilizing solution produced by an electrolytic cell (not visible on the figure) of the sterilizing system (106) into the water supply arrangement (102), wherein the sterilizing system (106) comprises an Oxidation Reduction Potential (ORP) sensor (108) for determining the oxidation/reduction potential of water within the water supply arrangement (102) and providing an output to a controller (not visible on the drawing) of the sterilizing system (106) for controlling a dosage of the sterilizing solution into the water supply arrangement (102). The water supply arrangement (102) further comprises a surveillance system (130), comprised within the sterilizing system (106), comprising a first sensor (110) for measuring water usage. In this particular embodiment, the first sensor (110) is a flow sensor measuring the amount of cold water pumped into the water supply arrangement (102). The surveillance system (130) further comprises a second sensor (112) for measuring dosage of the sterilizing solution. In this particular embodiment, the second sensor (112) is a flow sensor measuring the amount of sterilizing solution pumped into the water supply arrangement (102). The surveillance system is being arranged for receiving a first input relating to water usage from the water supply arrangement (102) from the first sensor (110). In this particular embodiment, the first input is the amount of cold water pumped into the system through a cold water supply (114). The surveillance system (130) is further being arranged for receiving a second input relating to the dosage of the sterilizing solution into the water supply arrangement (102) from the second sensor (112). In this particular embodiment, the second input is the amount of sterilizing solution pumped into the system through an injection piping (116). The surveillance system (130) is further being arranged for determining a relation between the water usage of the water supply arrangement (102) and the dosage of the sterilizing solution from the sterilizing system (106).

The electrolytic cell within the sterilizing system (106) is in connection with a brine tank (120). The brine tank (120) feeds the electrolytic cell with sodium chloride solution. By injection of this sodium chloride solution into the electrolytic cell a sterilizing solution is produced. This sterilizing solution is transferred to a sterilizing solution tank (122) prior to injection into the water supply arrangement (102) via the injection piping (116). The sterilizing system (106) is additionally fed with cold water from the cold water supply (114).

Furthermore, this particular embodiment comprises a circulation pump (118) for pumping water around the water supply arrangement (102). The water tank (104) may comprise a water heating device (132) for e.g. electric heating of the water in the water tank (104). Alternatives to electric heating, such as water heating or other means for heating water may also be used.

Additionally, the water arrangement system (102) comprises multiple valves (124) in addition to a tap (126). By opening and closing the valves (124) the water within the water supply arrangement (102) can be directed to pass by the ORP sensor (108) hereby measure the oxidation/reduction potential of the water within the water supply arrangement (102). Alternatively, the valves can be opened and closed so the ORP sensor (108) is bypassed. From the tap (126), a small sample of the water within the water supply arrangement (102) can be collected. The by-passing loop created by the above mentioned valves (124), can be positioned multiple places throughout the water arrangement system (102), and is not limited to the position schematically illustrated in Fig. 2.

The position of the first sensor (110), the second sensor (112), and the ORP sensor (108) are not limited to the positions shown in the above embodiment but can be positioned at multiple positions within the water supply arrangement (102).

The water supply arrangement (102) comprises one or more water pipes (128) for transportation of water and hot water throughout the entire water supply arrangement (102) and one or more exit pipes (134) for delivery of water to the end user.

Although particular features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications and equivalents.

**Examples**

When the ORP sensor is installed in a water supply arrangement it will regulate the amount of added sterilizing solution to the water supply arrangement to obtain a constant ORP level. This is obtained e.g. by continuously injecting small amounts of sterilizing solution. The amount of needed sterilizing solution may vary depending on at least three factors:

1. The usage of water within the water supply arrangement.
2. The speed of the passive degradation of sterilizing solution in the hot water within the water supply arrangement.
3. Organic material within the water supply arrangement. This is especially pronounced during startup of a new water supply arrangement, which has not previously been added a sterilizing solution.

When the water supply arrangement is clean, after a certain amount of time after startup, the relation between water usage and dosage of sterilizing solution is relatively constant. However, the relation can vary from one water supply arrangement to another water supply arrangement.

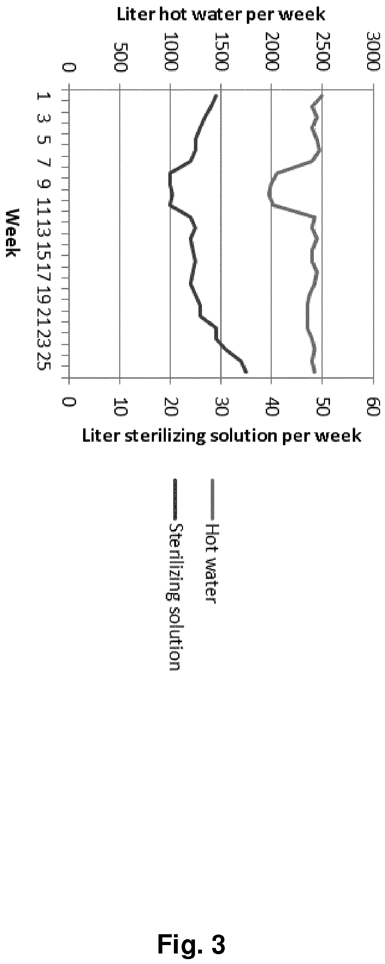

Figure 3 shows a typical usage of water within a water supply arrangement in addition to a typical dosage of sterilizing solution. It can be seen that when the water usage is reduced the dosage of sterilizing solution is similarly reduced.

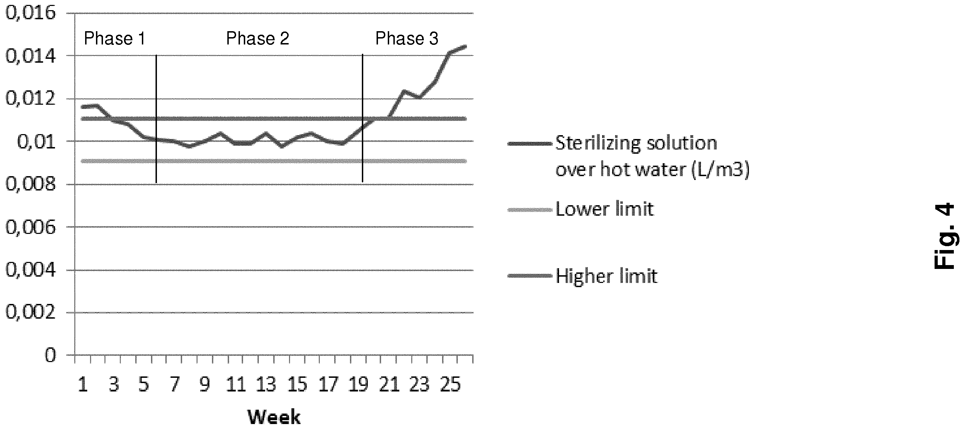

Figure 4 shows that by plotting the ratio between dosed sterilizing solution and water usage a new variable is obtained, which is relatively constant and independent of water usage. This variable is again different from one water supply arrangement to another water supply arrangement.

Phase 1 is the start-up phase after installation. Since the water supply arrangement has not previously been treated with a sterilizing solution, there may be biofilm and other organic material in the water supply arrangement.

When injecting the sterilizing solution this material will slowly dissolve and disappear from the piping via water consumption. However, during a period of time, typically 3-6 weeks, there will be increased sterilizing solution consumption, as also seen in Figure 3 and clearly shown in Figure 4.

Phase 2 is the operating phase, where the water supply arrangement is clean and everything works perfectly. With less fluctuation there is a fairly constant correlation between water usage and dosed sterilizing solution.

In Phase 3, an increased dosage of sterilizing solution is observed, as seen in Figure 3 and 4. This increase is due to errors in the ORP sensor. However, the error may also be a mistake in e.g. the dosing pump. Typically, there will be a need for calibration of the ORP sensor, but the ORP sensor may also be defective, requiring a new sensor. Alternatively, there may be need for repair of the dosing pump. An error may not only be an increase in dosage of sterilizing solution, but, depending on the error, may also be a decrease in dosage of sterilizing solution.

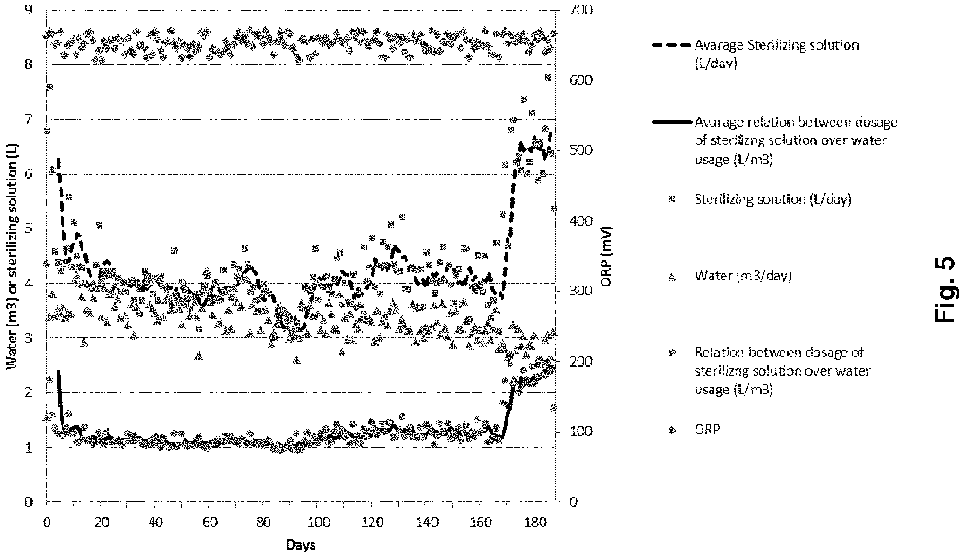

Figure 5 shows a different set of measurement from another water supply arrangement. It is clearly observed that the ratio between dosage of sterilizing solution and water usage is fairly constant over half a year. However, the ratio is suddenly increasing. In this example, the increase was not due to a defective ORP sensor; however it was due to increased temperature of the water within the water supply arrangement. By increasing the temperature one will also increase the passive degradation of sterilizing solution with the water supply arrangement and hereby increasing the dosage of the sterilizing solution. Such temperature increase may be accounted for within the surveillance system by including a temperature measurement of the water and allowing it to be included in determining of a relation between the water usage and the dosage of the sterilizing solution, possibly by automatically increasing limit values, or alternatively with a temperature dependent compensation factor.

From the above examples it can be seen that it is possible to find a constant value by comparing water usage with dosage of sterilizing solution. And only at start-up of a new arrangement and at errors within the arrangement, this constant value will change significantly.

## References

102 - Water supply arrangement

104 - Water tank

106 - Sterilizing system

108 - Oxidation Reduction Potential (ORP) sensor

110 - First sensor

112 - Second sensor

114 - Cold water supply

116 - Injection piping

118 - Circulation pump

120 - Brine tank

122 - Sterilizing solution tank

124 - Valve

126 - Tap

128 - Water pipe

130 - Surveillance system

132 - Water heating device

134 - Exit pipes

**Claims**

1. A surveillance system for surveillance of the operation of a sterilizing system for dosing a sterilizing solution produced by an electrolytic cell of the sterilizing system into a water supply arrangement, the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement, the surveillance system being arranged for receiving a first input relating to water usage from the water supply arrangement and for receiving a second input relating to the dosage of the sterilizing solution into the water supply arrangement as well as for determining a relation between the water usage and the dosage of the sterilizing solution.

2. A surveillance system according to claim 1, which further is arranged for monitoring the determined relation between the water usage and the dosage of the sterilizing solution, and determining whether the relation is within a range of values representing a normal operating mode of the sterilizing system, and providing an output accordingly.

3. A surveillance system according to any of claims 1-2, wherein the water supply arrangement comprises a temperature sensor arranged for measuring temperatures of hot water within the water supply arrangement, and wherein the surveillance system further being arranged for receiving a third input relating to the temperature of hot water within the water supply arrangement as well as for determining a relation between the water usage, the temperature of the hot water, and the dosage of the sterilizing solution.

4. A method of surveillance of the operation of a sterilizing system for dosing a sterilizing solution produced by an electrolytic cell into a water supply arrangement, the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement, the method comprising the steps of

 a. repetitively monitoring a water usage from the water supply arrangement as well as the dosage of the sterilizing solution into the water supply arrangement, and
 b. determining a relation between the water usage and the dosage of the sterilizing solution.

5. A method according to claim 4, wherein the water supply arrangement further comprises a temperature sensor arranged for measuring temperatures of hot water within the water supply arrangement, and wherein step b) additionally determines a relation between the water usage, the temperature of the hot water, and the dosage of the sterilizing solution.

6. A method according to any of claims 4-5, which further comprises the steps of

 c. monitoring the determined relation between the water usage and the dosage of the sterilizing solution, and
 d. determining whether the relation is within a range of values representing a normal operating mode of the sterilizing system, and providing an output accordingly.

7. A method according to claim 6, wherein step d) is provided by comparing the determined relation between the water usage and the dosage of the sterilizing solution to a predetermined value, and providing an output in case the determined relation deviates more than a predetermined amount from said predetermined value.

8. A method according to claim 6, wherein step d) is provided by determining a lower and higher tolerance value based on the determined relation between the water usage and the dosage of the sterilizing solution, and providing an output in case the relation between the water usage and the dosage of the sterilizing solution raises above or falls below the lower and higher tolerance value.

9. A sterilizing system for dosing a sterilizing solution produced by an electrolytic cell of the sterilizing system into a water supply arrangement, the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement, the sterilizing system comprising a surveillance system comprising a first measuring device for measuring water usage and a second measuring device for measuring a unit related to dosage of the sterilizing solution, wherein the surveillance system is being arranged for:

 a) receiving a first input relating to water usage from the water supply arrangement from the first measuring device,
b) receiving a second input relating to the dosage of the sterilizing solution into the water supply arrangement from the second measuring device, and
c) determining a relation between the water usage and the dosage of the sterilizing solution.

10. A sterilizing system according to claim 9, which further is being arranged for the steps of

d) monitoring the determined relation between the water usage and the dosage of the sterilizing solution, and
e) determining whether the relation is within a range of values representing a normal operating mode of the sterilizing system, and providing an output accordingly.

11. A sterilizing system according to any of claims 9-10, wherein the first measuring device is selected from a flow sensor, an energy sensor, a water level sensor, a feedback from a flow controlled water supply pump, or a control signal from a water supply pump.

12. A sterilizing system according to any of claims 9-11, wherein the second measuring device is selected from a flow sensor, an energy sensor, a water level sensor, a feedback from a flow controlled dosage pump, a control signal from a flow controlled dosage pump, or a hour meter.

13. A sterilizing system according to any of claims 9-12, wherein the ORP sensor is being arranged for measuring an oxidation/reduction potential in water within the water supply arrangement and adjusts the amount of released sterilizing solution from the sterilizing system to maintain a constant oxidation/reduction potential in the water.

14. A water supply arrangement comprising:

- a water tank for hot water;
- a sterilizing system for dosing a sterilizing solution produced by an electrolytic cell of the sterilizing system into the water supply arrangement, wherein the sterilizing system comprising an Oxidation Reduction Potential (ORP) sensor for determining the oxidation/reduction potential of water within the water supply arrangement and providing an output to a controller of the sterilizing system for controlling a dosage of the sterilizing solution into the water supply arrangement; and
- a surveillance system comprising a first measuring device for measuring water usage and a second measuring device for measuring dosage of the sterilizing solution, wherein the surveillance system is being arranged for:

  ∘ receiving a first input relating to water usage from the water supply arrangement from the first measuring device,
  ∘ receiving a second input relating to the dosage of the sterilizing solution into the water supply arrangement from the second measuring device, and
  ∘ determining a relation between the water usage and the dosage of the sterilizing solution.

15. A water supply arrangement according to claim 14, wherein the water supply arrangement further comprises an ion-exchange water softener arranged to supply the electrolytic cell with deionized water and a brine tank arranged to supply the electrolytic cell with a sodium chloride brine solution, and wherein the water supply arrangement is being arranged for conducting a regeneration of the water softener by use of the sodium chloride brine solution from the brine tank.

```
┌─────────────────────┐        ┌─────────────────────┐
│   Monitoring water  │        │ Monitoring dosage of│
│        usage        │        │  sterilizing solution│
└─────────────────────┘        └─────────────────────┘
```

Determining a relation
between the water usage
and the dosage of the
sterilising solution

Monitoring the determined relation

YES

Is the determined relation within a range of
values representing a normal operating mode
of the sterilising system?

NO

Provide an
output

**Fig. 1**

**Fig. 2**

Fig. 3

Fig. 4

Fig. 5

Europäisches
Patentamt

European
Patent Office

Office européen
des brevets

# EUROPEAN SEARCH REPORT

Application Number

EP 18 15 1655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/299096 A1 (GREENWOOD JACK [US] ET AL) 13 October 2016 (2016-10-13) * paragraphs [0029], [0033], [0037], [0062]; figures 1,6 * ----- | 1-15 | INV. C02F1/00 ADD. C02F1/467 C02F1/461 |
| X | US 2016/289085 A1 (DEMYER MARIANNA [US]) 6 October 2016 (2016-10-06) * the whole document * ----- | 1-15 | |

TECHNICAL FIELDS
SEARCHED (IPC)

C02F

The present search report has been drawn up for all claims

| Place of search | Date of completion of the search | Examiner |
|---|---|---|
| The Hague | 23 February 2018 | Du, Mingliu |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 15 1655

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2018

| Patent document cited in search report | Publication date | Patent family member(s) | Publication date |
|---|---|---|---|
| US 2016299096 A1 | 13-10-2016 | EP 3109629 A2<br>US 2016299096 A1 | 28-12-2016<br>13-10-2016 |
| US 2016289085 A1 | 06-10-2016 | NONE | |

EPO FORM P0459

For more details about this annex : see Official Journal of the European Patent Office, No. 12/82